# EUROPEAN PATENT SPECIFICATION

(11) **EP 3 645 793 B1**
(45) Date of publication and mention of the grant of the patent: **21.12.2022**
(21) Application number: 18740343.1
(22) Date of filing: 27.06.2018
(51) Int. Cl.: E01C 3/00, E01C 13/02

(54) **PANEL FOR MANUFACTURING A SUBSTRUCTURE OF A FLOOR STRUCTURE**
PANEL ZUR HERSTELLUNG EINER UNTERKONSTRUKTION EINER BODENSTRUKTUR
PANNEAU DE FABRICATION D'UNE SOUS-STRUCTURE D'UNE STRUCTURE DE SOL

(30) Priority: 27.06.2017 NL 2019127
(43) Date of publication of application: 06.05.2020
(73) Proprietor: Energy Office B.V., 3334 KD Zwijndrecht (NL)
(72) Inventor: GOUW, Marcel Reijer, 3847 LT Harderwijk (NL); GERVEDINK NIJHUIS, Frank Gerwin, 3583 TK Utrecht (NL)
(74) Representative: Patentwerk B.V.
(86) International application number: PCT/NL2018/050415
(87) International publication number: WO 2019/004827

(56) References cited:
- WO-A1-2017/058018
- US-A1- 2003 056 432
- US-A1- 2017 030 026
- US-A1- 2017 142 779

## Description

The invention relates to a panel for manufacturing a substructure of a floor structure, such as a road surface or sports floor and a system comprising several such panels. The invention also relates to a floor structure, such as a road surface or sports floor, comprising a substructure based on the system according to the invention.

For the construction of sports fields, where possible, more often artificial grass fields are chosen on account of the durability and permanent load-bearing capacity of artificial grass relative to natural grass. In addition, artificial grass does not require mowing, nutrients or regular sprinkler irrigation in order to remain in optimum condition. A sports field structure according to the prior art is described in US 2017/030026 A1. The sports field comprises a base structure and a cover, which cover is at least partially permeable to fluid. The base structure comprises voids for containing fluids and the cover can be formed by an artificial sports layer, such as artificial grass. An important technical disadvantage of using artificial grass fields is that absorption of solar energy may cause the temperature of artificial grass to rise considerably to well above 70 degrees Celsius, which is experienced by users as unpleasant, and in addition leads to an increase in the concentration and, as a result, injury sensitivity of the users. Artificial grass fields are generally sprayed with water to allow the fields to cool. However, such a solution is relatively expensive, and usually only possible if the artificial grass field is not in use. In addition, spraying the artificial grass field with water affects the playing condition of the artificial grass field, which is not preferable either. There is therefore a need for an alternative solution in order to manage the heat development of artificial grass. A first aim of the invention is to meet the aforementioned need.

A second aim of the invention is to supply a substructure of a floor structure, such as an artificial grass field or road surface, by means of which the temperature of a top layer of the floor structure may be controlled in an improved manner.

For this purpose, the invention provides a panel according to Claim 1 and a system according to Claim 2. In the following the panel is also called PCM (phase change material) panel. PCM as such stands for : Phase Change Material.

An advantage of the system according to the invention is that heat (or cold) that is present in a top layer and is usually developed by weather conditions may be given up relatively efficiently to the substructure based on mutually coupled PCM panels. As a result, spraying the top layer with a liquid, such as water, is no longer necessary. In addition, the heat (or cold) given up by the top layer to the substructure formed by the system according to the invention can be stored temporarily in the PCM panels and optionally be given up again to the top layer at a later time point (if there is a need for this) and/or be led away and utilized elsewhere. This makes it possible to keep the temperature of the top layer, such as an artificial grass cover or asphalt paving layer, relatively low in sunny periods and control it in an improved manner, which are beneficial for the quality and the userfriendliness of the top layer. If the top layer for example is formed by an artificial grass cover, usually provided with a so-called infill (granular filler), it will be possible to maintain the maximum temperature of the artificial grass to a limited extent at approx. 50 degrees Celsius in a moderate, because an important part of the heat absorbed by the artificial grass is transferred to the underlying PCM panels, which is experienced by users as significantly more pleasant. During relatively cold nights, when frost may possibly occur, the heat stored in the PCM panels will be returned to the overlying top layer, so that freezing of the top layer can be prevented. This same positive technical effect occurs with a top layer of a different kind, such as asphalt paving layers, so that freezing of road sections can be prevented. In order to allow the heat transfer between a top layer and an underlying substructure formed by the system according to the invention to take place as completely and in as controlled a manner as possible, the PCM panels of the system according to the invention are arranged to be coupled with one or more adjacent panels, in such a way that the PCM panels are also interlocked to a certain extent with respect to each other. Some clearance is conceivable, but it is preferable for the panels to be fixed essentially completely with respect to each other. The coupled PCM panels are also located near each other, and preferably grip one another. If the system according to the invention is applied as the substructure of a floor structure for a sports field based on artificial grass, then it is important that the PCM panels are located as well as possible in one and the same plane and remain in the same plane. That is why it is preferable for the coupled PCM panels essentially to be locked together both in a direction that extends in a plane defined by the coupled PCM panels (usually in the horizontal plane), and also in a direction essentially perpendicular to the plane defined by the coupled PCM panels (usually in the vertical plane). In the coupled, locked state of the PCM panels it is conceivable that the panels are mutually fixed completely, and moreover are practically not mutually swivelling. However, usually a limited mutual swivelling ability of the PCM panels in the coupled state will be maintained, so that the material stress in the housings of the PCM panels can remain limited on loading of the PCM panels, which may greatly reduce the likelihood of tearing and/or breaking of the housings, and therefore leaking out of PCM. The system according to the invention can be used both indoors and outdoors. The system according to the invention may be manufactured as a substructure (subfloor) in various types of floor structure. The system may then be positioned directly beneath the top layer, and be in direct contact with the top layer. However, it is also conceivable that one or more, usually thin and/or heat-conducting, intermediate layers, may be positioned as a backing layer between the top layer and the substructure formed by the system according to the invention. As already stated, the top layer may be of various kinds, which also applies to the application of the floor structure produced as such. It is then for example conceivable that the floor structure, in which the substructure made by the system according to the invention is applied, has a concrete (or concretecontaining) top layer, wherein the floor structure is for example intended for use on airfields, bridges, car parks, footpaths, cycle tracks, road surfaces, viaducts, terraces, tiled floors, container decks, floor elements for transport crates, vehicle decks, ships' decks, and helidecks. It is also conceivable that the floor structure which by means of the system according to the invention is intended to be used as asphalt road surface, artificial grass field, sports fields, as a hard court field or artificial grass sports field, and/or as natural environment, wherein a natural top layer, such as natural grass and/or sand, is applied.

In phase change materials (PCMs), use is made of the latent heat of a phase change of the PCM for giving up heat of fusion during the solidification of the PCM and taking up heat of fusion during melting of the PCM, so that PCM may be regarded as a thermal accumulator. Because the heat of fusion of materials is much higher than the specific heat, a much higher specific energy density can be reached by utilizing latent heat than storage by means of sensible heat. This leads to more compact storage. Depending on the temperature level of heat/cold storage, a suitable PCM must be sought with a suitable melting temperature, in order to store heat or cold for use at a later time. Typical examples of PCMs are paraffins, salt hydrates and acid fats. PCMs are usually contained in an essentially rigid housing, usually made of plastic, which as such form a PCM panel. In the system according to the invention, PCM panels are used which are filled at least partially with a PCM, wherein the phase change temperature (melting temperature) of the PCM is preferably between 5 and 90 degrees Celsius, more preferably between 5 and 40 degrees Celsius. A PCM with a phase change temperature that falls within the aforementioned range is usually suitable for being used in types of floor structure intended as a road surface and/or sports field, such as an artificial grass field. More particularly, the PCM used, if the system according to the invention is used as a substructure under an asphalt paving layer, preferably has a phase change temperature that is between 18 and 30 degrees Celsius. Preferably, the PCM used, if the system according to the invention is used as a substructure under a top layer intended for sports activities, such as an artificial grass cover, preferably has a phase change temperature that is between 25 and 40 degrees Celsius, in particular between 28 and 40 degrees Celsius. An example of such a PCM is calcium chloride hexahydrate (CaCl₂·6H₂O), which has a typical phase change temperature of approx. 28 degrees Celsius.

The one or more through holes that are surrounded by at least one PCM panel, and preferably each PCM panel, and in particular by the housing of each PCM panel, have on the one hand the purpose of making the PCM panels stiffer, which contributes to the load-bearing capacity and durability of the PCM panels. On the other hand the through holes may be used as drainage holes for the discharge of water and/or for anchoring the PCM panels in the floor structure. For anchoring, it is for example conceivable to apply the PCM panels in (initially liquid) concrete mix, wherein the concrete mix will also flow into the through holes, wherein after curing of the concrete mix the PCM panels will be anchored relatively stably. If the system according to the invention is applied as the substructure of an artificial grass field, then the through holes will in particular function as drainage holes for the discharge of water in the downward direction. Usually the through holes are arranged essentially regularly, in order to be able to produce a relatively uniform stiffness of the PCM panel, as well as in order to be able to achieve a relatively uniform water discharge and/or anchoring. The at least through hole then connects an underside and upper side of the PCM panel, and is also designated as a "through-hole".

Usually at least one PCM panel, and preferably each PCM panel, will enclose a single compartment for PCM. At least one PCM panel, and preferably each PCM panel is usually made essentially rigid, and more preferably is made at least partially of plastic, such as polypropylene (PP) and/or polyethylene (PE), in particular high-density polyethylene (HDPE), and/or of metal. The wall thickness of the housing is preferably between least 2 millimetres. This wall thickness usually has a direct effect on the stiffness of the PCM panel. The housing of each PCM panel is preferably blow-moulded.

The housing of each PCM panel is essentially of closed construction, as PCM can and will remain enclosed in the housing. Preferably each PCM panel is provided with at least one filling hole. Preferably each PCM panel is also provided with a vent hole, in order to facilitate filling of the PCM panel with PCM. Both the filling hole and the vent hole are usually completely closed during use. Usually, depending on the size of the PCM panels, during the filling of each PCM panel 1-6 kilograms of PCM will be applied in the compartment that is surrounded by the housing. Typical (convenient) dimensions of PCM panels employed in the system are 30x60 centimetres, 60x80 centimetres, 80x120 centimetres (which coincides with the standard format of a Europallet), and 100x100 centimetres. Other dimensions of the PCM panels are of course also conceivable. The PCM panels will usually possess an essentially flat geometry. However, it is also conceivable that for particular applications non-flat, for example curved and/or angular, PCM panels are used in the system according to the invention.

The housing is preferably provided with at least one stiffening structure, in particular at least one stiffening rib. The stiffening structure will further increase the stiffness, and therefore sturdiness, of the PCM panel. The stiffening structure is usually applied in an underside and/or upper side of the PCM panel, wherein the stiffening structure is preferably formed by a local deformation of the upper side and/or underside of the PCM panel. Research has shown that cross-shaped (+ shaped) stiffening structures can strengthen the PCM panel in a relatively efficient manner. The length and width of each stiffening structure will usually be limited, and in a typical situation will not be greater than 8 centimetres.

The system according to the invention is suitable for use in various climates, in order to keep the top layer of the floor structure relatively temperature-stable. In hot climates, such as for example in Southern Europe and Africa, the night-time temperature will usually remain relatively high, especially in the summer, so that in these circumstances it is usually desirable to lead away the heat stored in the PCM panels via fluid pipelines, so that the PCM panels are cooled de facto, and therefore the top layer can be cooled. Consequently in hot climates, and possibly also in other kinds of circumstances, it is preferable for an outside surface of the underside and/or an outside surface of the upper side of the housing of at least one PCM panel, preferably each PCM panel, to be provided with at least one (surface) groove arranged for receiving at least one part of a fluid pipeline, wherein each groove preferably connects to two longitudinal edges of the PCM panel. A typical width of the groove is between 14 and 18 millimetres. The depth of the groove is preferably greater than or equal to the diameter of the fluid pipeline, so that the fluid pipeline can essentially fit in the groove completely. A typical depth of the groove is at least 14 millimetres, preferably at least 16 millimetres. For example water, glycol and/or a mixture thereof may be led through the fluid pipeline. The fluid led through the fluid pipeline has the purpose of transporting heat and/or cold from and to the PCM panels, so that the PCM panels may be discharged or charged. The heat (or cold) led away may optionally be (re)used usefully at a distance from the floor structure.

The dimensioning of the PCM panels is essentially identical. This usually facilitates installation of the PCM panels when making a substructure of a floor structure.

Usually each PCM panel comprises several first coupling elements, wherein at least two first coupling elements are preferably positioned on or near (i.e. at a short distance, usually a maximum distance of 5 centimetres) different longitudinal edges of the PCM panel. In this way a PCM panel may be coupled relatively simply with several other PCM panels. Preferably one or more first coupling elements are positioned on or near each longitudinal edge of the PCM panel. This makes it possible to couple a PCM panel all round with other PCM panels.

The second coupling element may be formed by and/or form part of a separate (loose) system component. In this embodiment the separate system component does not comprise a PCM, and is consequently no longer formed by a PCM panel. The separate system component preferably comprises at least one separate coupling structure (coupling piece), wherein the coupling structure comprises at least two second coupling elements. This makes the coupling structure suitable for mutually coupling several PCM panels. Moreover, it is conceivable to form the coupling structure as a pin, in particular as a dowel, which at a first end can interact with a first coupling element of a first PCM panel and at a second end can interact with a first coupling element of a second PCM panel. Preferably the coupling structure comprises a bridging element, in particular a connecting strip, wherein the at least two second coupling elements, preferably at a distance from one another, are connected to the bridging element. If the coupling elements are essentially made pin-shaped and essentially project perpendicularly with respect to the bridging element, this makes it possible for example to lock two (or more) PCM panels from an upper side and/or underside with respect to each other. It is advantageous if an upper side and/or an underside of each PCM panel are provided with at least one receiving space for receiving at least one part of the bridging element of the coupling structure. This makes it possible to a through the bridging element not allow to project with respect to a plane defined by the upper side and/or underside of the PCM panel, so that the substructure formed by the system can be made relatively flat (level), especially if the thickness of the bridging element of the coupling structure essentially coincides with or is less than the depth of the at least one receiving space. The at least one receiving space is usually formed by a countersunk part of the underside and/or upper side of the PCM panel. It is conceivable for at least one through hole of a PCM panel to be arranged in order to function as a first coupling element. Usually at least one other through hole of the same PCM panel will not function as a first coupling element and may function as a drainage hole and/or anchoring hole. It is advantageous if the aforementioned receiving space connects for a part of the bridging element to at least one through hole arranged as a first coupling element. If at least one through hole of a PCM panel is arranged to function as a first coupling element, the second coupling element of the coupling structure will, during coupling of the PCM panels, be at least partially received in the through hole arranged as a first coupling element. As a result, a pin/hole connection arises de facto. Preferably a cross-section of the second coupling element and a cross-section of the first coupling element are essentially formed complementary, so that the second coupling element can be received with a fit, in particular a light drive fit, in the first coupling element, which is usually beneficial for the locking of the PCM panels. More preferably, a peripheral wall of the second coupling element is provided with at least one projecting locking element, preferably an annular locking element (projecting flange), and said at least one locking element is arranged to be received at least partially in a recess made in a peripheral wall of the through hole arranged as a first coupling element, preferably a peripheral groove (groove-shaped recess). This makes it possible to lock PCM panels together in an improved manner in the upward direction (vertical direction). It is conceivable that at least one coupling structure is connected inseparably to a PCM panel. The coupling structure may then for example be glued and/or welded to a PCM panel. Usually the coupling structure will be made at least partially of plastic. Preferably the coupling structure is made from one piece (integral). The coupling structure may for example be produced by injection moulding.

In another preferred embodiment of the system according to the invention, at least one second coupling element forms an integral part of at least one PCM panel, preferably each PCM panel. In this case the one or more PCM panels will each be provided with both at least one first coupling element and at least one second coupling element. Preferably at least one PCM panel, preferably each PCM panel, is provided on at least one longitudinal edge of the first coupling element, and on at least one other longitudinal edge, preferably an overlying longitudinal edge, is provided with the second coupling element. This makes it possible to couple PCM panels in series relatively simply. More preferably each longitudinal edge is provided with either a first coupling element or a second coupling element, so that PCM panels may be coupled on each longitudinal edge with another PCM panel. Preferably the first coupling element comprises at least one tongue projecting laterally, and the second coupling element comprises at least one complementary recess (groove) arranged for receiving at least one part of the tongue of an adjacent PCM panel. In this way a, usually detachable, tongue-and-groove joint can be made between the PCM panels. The tongue may be provided with at least one locking projection arranged to interact in a locking manner with a locking hole forming part of the second coupling element, in order to improve the interlocking of coupled PCM panels. In an especially preferred embodiment the second coupling element comprises a top lip and a bottom lip, between which the complementary recess is located. Such an embodiment results in a desired upward (vertical) locking effect between the PCM panels. Moreover, the bottom lip may be longer than the top lip, so that the bottom lip may for example be arranged for carrying (supporting) at least one part of the tongue. More preferably an upper side of the bottom lip is provided with a recess for receiving at least one part of the tongue of an adjacent PCM panel. Such a measure will result in a/an (improved) locking effect between the PCM panels in the horizontal direction (i.e. a direction parallel to a plane defined by the PCM panels). Moreover, it is especially advantageous if the first coupling element is arranged to be coupled with the second coupling element by fitting the tongue in at least one part of the recess followed by rotating the tongue in the downward direction, so that the tongue fits essentially completely in the recess. Such a rotating motion is usually especially practical and simple for coupling adjacent PCM panels together on longitudinal edges. For this, usually a first PCM panel will already be installed, after which the tongue of a second PCM panel is placed in the recess (groove) of the first PCM panel, then the second PCM panel is swivelled in the downward direction until both PCM panels are located in essentially the same plane.

The invention further relates to a substructure (subfloor), made in a floor structure or for making in a floor structure, comprising a system according to the invention, wherein several PCM panels located in one and the same plane are coupled in such a way that the coupled PCM panels are essentially locked both in a direction that extends in a plane defined by the coupled PCM panels, and preferably also in a direction essentially perpendicular to the plane defined by the coupled PCM panels. Further variants of the substructure have already been described in detail in the foregoing.

The invention also relates to a floor structure, in particular a sports floor or a road surface, comprising: a substructure formed by a system according to the invention, wherein several PCM panels located in one and the same plane are coupled in such a way that the coupled PCM panels are essentially locked both in a direction that extends in a plane defined by the coupled PCM panels, and preferably also in a direction essentially perpendicular to the plane defined by the coupled PCM panels, and at least one top layer applied on the substructure, in particular a sports covering layer, such as an artificial grass layer, and/or an asphalt paving layer. Further variant embodiments of the floor structure have already been described in detail in the foregoing. Usually the substructure will be applied - directly or indirectly - on an underlying foundation, such as a bed of sand and/or crushed rubble. As already stated in the foregoing, it may be desirable that at least one fluid pipeline is applied which essentially fits against one or more PCM panels for discharge of thermal energy stored in the PCM panels and/or supply of thermal energy to the PCM panels, wherein the fluid pipeline is preferably provided with water and/or glycol. The at least one fluid pipeline may then be fitted at least partially in the (surface) groove or (surface) grooves that are made in an underside and/or upper side of a PCM panel. Usually the at least one fluid pipeline is positioned under the assembly of coupled PCM panels.

The invention also relates to a PCM panel for use in a system according to the invention.

The invention will now be explained on the basis of non-limiting embodiment examples illustrated in the following figures, wherein corresponding elements are designated with corresponding reference numbers. In the figures:
- Fig. 1 shows a top view of a system for manufacturing a substructure of a floor structure according to the invention in the coupled state,
- Fig. 2 shows a bottom view of the system as shown in Fig. 1,
- Fig. 3 shows a top view of a PCM panel for use in a system according to the invention,
- Fig. 4 shows a bottom view of the PCM panel as shown in Fig. 3,
- Fig. 5 shows a top view of a coupling structure for use in a system according to the invention,
- Fig. 6 shows a side view of the coupling structure as shown in Fig. 4,
- Fig. 7 shows a part of a cross-section of a system according to the invention in the coupled state,
- Fig. 8 shows a part of a cross-section of an alternative system according to the invention in the coupled state,
- Fig. 9 shows a part of a cross-section of another alternative system according to the invention in the coupled state,
- Fig. 10 shows a part of a cross-section of yet another alternative system according to the invention in the coupled state, and
- Fig. 11 shows a floor structure comprising a substructure formed by a system according to the invention.

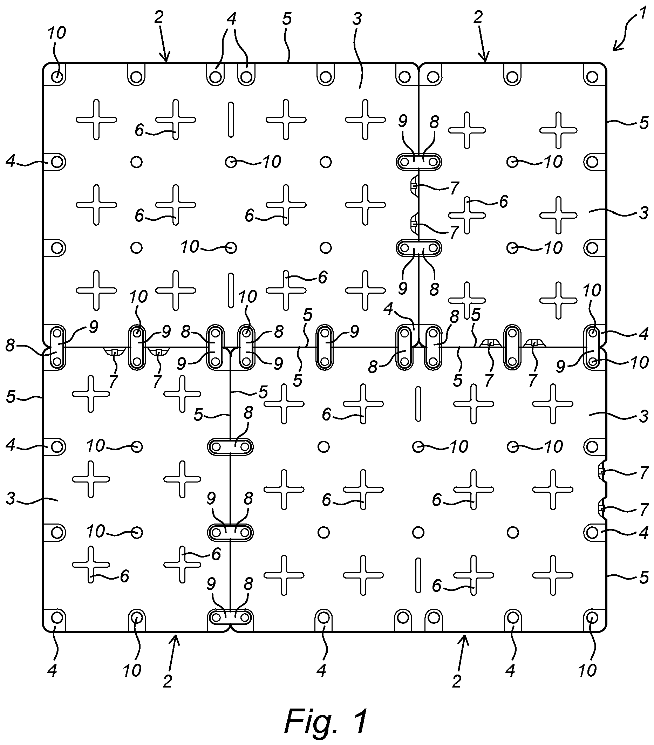

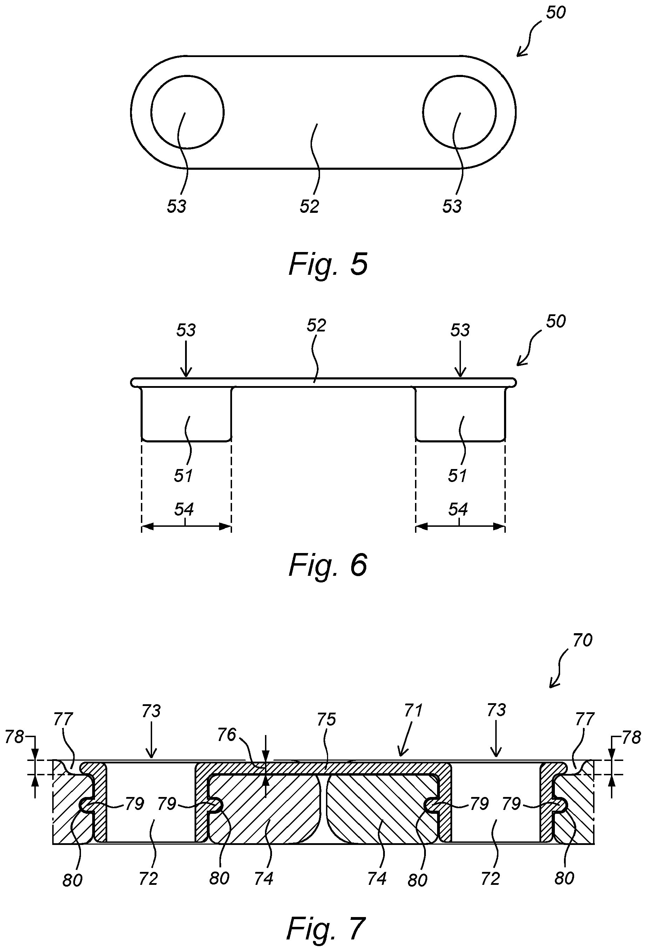

Fig. 1 shows a top view of a system 1 for manufacturing a substructure of a floor structure according to the invention in the coupled state. The system 1 comprises several coupled PCM panels 2 that are located essentially in the same plane. The PCM panels 2 used in the system 1 shown differ from one another in dimensions in order to make a stretcher arrangement possible and at the same time achieve a rectangular or square outer periphery of the system. It is however also conceivable that all PCM panels 2 in the system have the same dimensions. Each PCM panel 2 comprises a housing 3 and one or more first coupling elements 4. The first coupling elements are applied on the longitudinal edges 5 of the PCM panels 2 and are formed by recesses in the housings 3 of the respective PCM panels 2. In order to give the housing 3 sufficient stiffness and strength, the housing 3 is provided with a stiffening structure, which in the case shown is formed by a number of recesses 6 made in the upper side of the housing, which form inward-directed stiffening ribs 6. The stiffening ribs 6 may, as shown, be applied regularly over the surface of the housing 3. It is, however, also possible to choose an irregular distribution or some other location (such as the underside of the housing) of the stiffening ribs 6. Moreover, the housing 3 of each of the PCM panels 2 encloses one or more compartments, filled with phase change material. A suitable phase change material for application in the PCM panels 2 is for example calcium chloride. To make filling and emptying of the compartments possible, the housing 3 of preferably each of the PCM panels 2 is provided with one or more filling holes 7. In order to lock the PCM panels 2 together in at least one direction that extends in the plane defined by the coupled PCM panels 2, the system 1 also comprises several coupling structures 8 that are arranged for engaging with the first coupling elements 4 provided on the PCM panels 2. The coupling structures 8 each comprise two second coupling elements (see Figs. 5 and 6). The second coupling elements are arranged for engaging with the first coupling elements 4 of two adjacent panels and are joined together by a bridging element 9. The PCM panels 2 further comprise several through holes 10 for drainage purposes. The through holes 10 arranged on the longitudinal edges 5 of the PCM panels also form part of the first coupling elements 4 and serve for engaging with second coupling elements formed complementary to the dimensions of these through holes 10 (see Figs. 5 and 6).

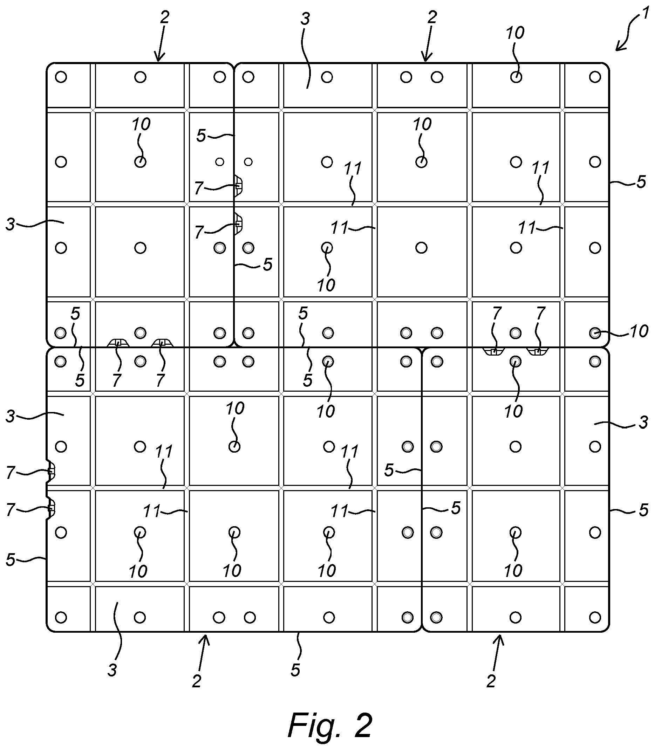

Fig. 2 shows a bottom view of the system 1 as shown in Fig. 1, in which the several mutually coupled PCM panels 2 are also visible. As well as the PCM panels 2 being provided with through holes 10 that connect the underside and the upper side of the PCM panels 2, a grid of grooves 11 is also provided on the underside, in which a (part of a) fluid pipeline (not shown) may be received. For this purpose the grooves 11 run in a straight line over the PCM panels 2 and then connect to opposite longitudinal edges 5 of each of the PCM panels 2. In addition, the grooves 11 are made on the underside of a PCM panel 2 in such a way that the grooves 11 on the different PCM panels 2 run into each other on coupling the PCM panels. Although grid-wise application of the grooves 11, wherein the grooves cross each other, is preferred because this offers the possibility of allowing fluid pipelines to be connected in different orientations on the PCM panels 2, it is also conceivable that the grooves 11 are applied parallel to each other in a single orientation on the PCM panels 2.

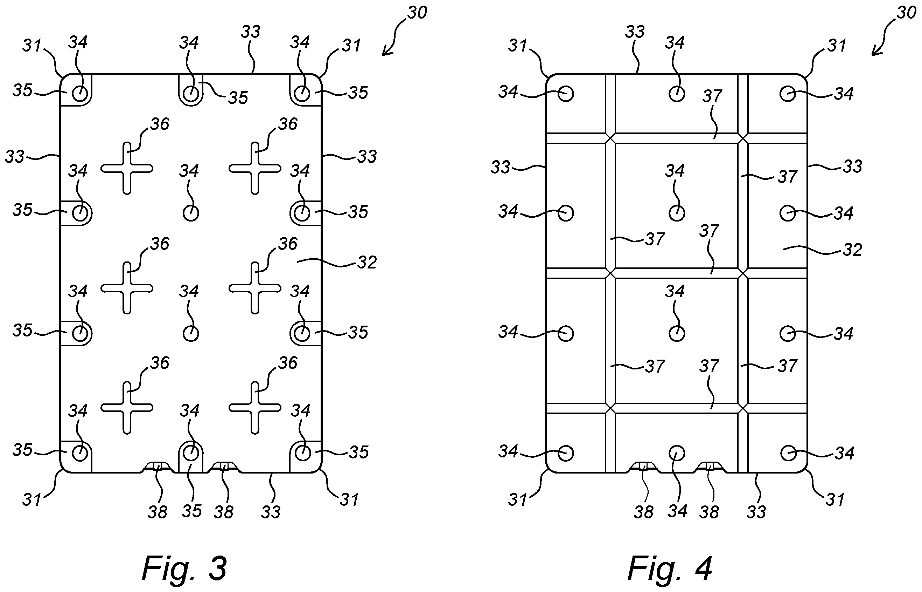

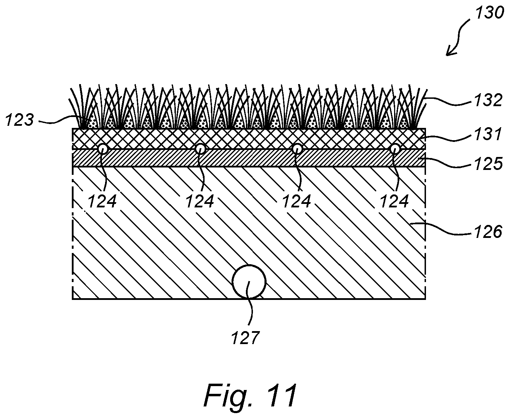

Figs. 3 and 4 show, respectively, a top view and a bottom view of a PCM panel 30 for use in a system according to the invention. The panel 30 is essentially rectangular and is provided with rounded corners 31. The PCM panel 30 suitable for use in a system according to the invention has in a usual case a length between 0.5-1 m, a width between 0.3-1 m and a thickness between 1.5-10 cm. Optionally, the PCM panel 30 comprises a housing 32 made of a material comprising polyethylene of the high density type (HDPE). The wall thickness for this is preferably at least 2 mm, and will usually be between 2 and 10 mm. On the longitudinal edges 33 of the panel 30, several through holes 34 are provided for drainage purposes in the housing 32, which also serve as first coupling elements. Around the through holes 34 provided on the longitudinal edges 33 of the PCM panel 30, the housing has a smaller thickness relative to the rest of the panel. By the local decrease in thickness of the panel at the site of the first coupling elements, a receiving space 35 is formed for a part of a coupling structure (not shown). As a result, a coupling structure may, on coupling the PCM panels, be countersunk with respect to the upper side of the panels. The PCM panel 30 is moreover provided with through holes 34 provided centrally in the housing, which connect the underside and the upper side of the PCM panel together. The upper side is furthermore provided with several stiffening ribs 36, while on the underside several grooves 37 are provided for receiving at least one part of one or more fluid pipelines, such as for example one or more fluid pipelines 124 as shown in Fig. 11. It is, however, also conceivable that the stiffening ribs 36 and/or the grooves 37 are provided on the other of the upper side and underside of the PCM panel 30. Finally the PCM panel 30 is provided with filling holes 38 for filling the compartment(s) enclosed by the housing 32 with PCM-material.

Figs. 5 and 6 show a top view and respectively a side view of a coupling structure 50 for use in a system according to the invention. The coupling structure 50 comprises two second coupling elements 51 for engaging with two first coupling elements provided on adjacent PCM panels. A bridging element 52 ensures that the two second coupling elements 51 are connected to each other at a distance so that by means of the coupling structure 50 a connection may be made between two adjacent PCM panels. The second coupling elements 51 are arranged to be received at least partially in a through hole arranged as a first coupling element. The cross-section 54 of the second coupling element 51 is adapted for this and is preferably selected in such a way that the second coupling element 51 can be fitted in the through hole with an interference fit. The second coupling elements 51 are moreover of hollow construction, so that a through hole 53 is maintained for drainage purposes.

Fig. 7 shows a part of a cross-section of a system 70 according to the invention in the coupled state employing a coupling structure 71 essentially the same as the coupling structure 50 shown in Figs. 5 and 6. The coupling structure 71 engages with the second coupling elements 72 on the through holes 73 arranged as first coupling element provided in two adjacent PCM panels 74. The second coupling elements 72 are joined to each other by means of a bridging element 75 at a distance from each other, so that the PCM panels 74 are interlocked in the direction of the plane defined by the coupled PCM panels 74. The thickness 76 of the bridging element 75 of the coupling structure 71 is then selected in such a way that it essentially coincides with the depth 78 of the receiving space 77 that connects to the through holes 73 arranged as first coupling element in the PCM panels 74. Moreover, the upper side of the bridging element 75 is in line with the upper side of the respective PCM panels 74. The second coupling elements 72 of the coupling structure 71 shown in Fig. 7 are in addition provided with projecting, annular locking elements 79, which in the coupled state are received in a recess or peripheral groove 80 made in a peripheral wall of the through hole arranged as a first coupling element 73. The locking element 79 and the peripheral groove 80 interact to lock the coupled PCM panels 74 also in a direction perpendicular to the plane defined by the coupled PCM panels 74.

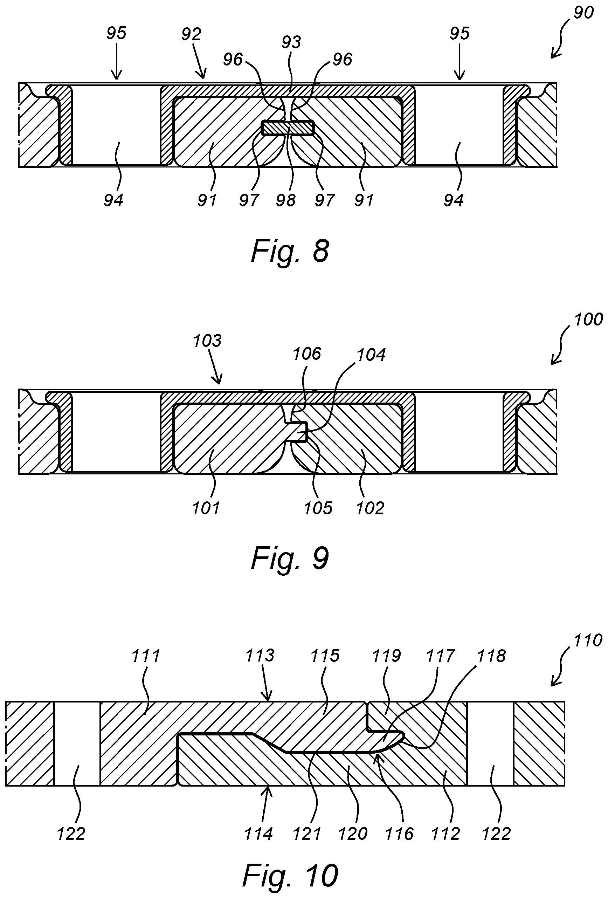

Fig. 8 shows a part of a cross-section of an alternative system 90 according to the invention in the coupled state. Just as with the coupling structure 71 as shown in Fig. 7, the PCM panels 91 are interlocked by the coupling structure 92 shown here in the direction of the plane defined by the coupled PCM panels 91 by means of two second coupling elements 94 connected via a bridging element 93, which are received in through holes 95 arranged as first coupling element. This time, the locking in a direction perpendicular to the plane defined by the coupled PCM panels 91 is not formed by a locking element and a peripheral groove complementary thereto, but for vertical locking, recesses 97, in which a dowel 98 is received, are provided in two sides 96 opposite each other of two adjacent panels 91.

Fig. 9 shows a part of a cross-section of yet another alternative system 100 according to the invention in the coupled state, wherein the PCM panels 101,102 are interlocked in the direction of the plane defined by the coupled PCM panels 101,102 by means of a coupling structure 103. In order to lock the coupled PCM panels 101,102 also in a direction perpendicular to the plane defined by the coupled PCM panels 101,102, in the present embodiment a projection 104 is provided on a side of a first PCM panel 101 which in the coupled state of the PCM panels 101,102 is received in a recess 105 of a side 106 of a second PCM panel 102 adjacent to the first PCM panel.

Fig. 10 shows a part of a cross-section of yet another alternative system 110 according to the invention in the coupled state. In the alternative shown, two adjacent PCM panels 111,112 are also coupled with each other by means of a first coupling element 113 and a second coupling element 114. The first coupling element 113 is connected inseparably to a first panel 111 of the two adjacent PCM panels 111,112 and comprises a lateral projecting tongue 115. The second coupling element 114 is connected inseparably to a second panel 112 of the two adjacent PCM panels 111,112 and comprises a complementary recess 116 for receiving the tongue 115 of the first panel 111 of the two adjacent PCM panels 111,112. The tongue 115 is provided with a locking projection 117 arranged to interact in a locking manner with a part of the second coupling element 114 forming a locking hole 118. The locking hole 118 is enclosed on an upper side by a top lip 119 and on an underside by a bottom lip 120 of the second coupling element 114, wherein the bottom lip 120 is longer than the top lip 119. The upper side of the bottom lip 120 is moreover provided with a recess 121 for receiving at least one part of the tongue 115 of the first panel 111 of the two adjacent PCM panels 111,112. Through the specific form of the first and the second coupling element 113,114, the PCM panels 111,112 are in the coupled state, wherein the tongue 115 fits essentially completely in the recess 116, essentially locked in a direction that extends in a plane defined by the coupled PCM panels 111,112 and in a direction essentially perpendicular to the plane defined by the coupled PCM panels 111,112. Finally, in the present alternative through holes 122 are provided in the PCM panels 111,112 which connect together the underside and the upper side of the PCM panels 111,112.

Fig. 11 finally shows a floor structure 130 comprising a substructure 131 formed by a system according to the invention. The floor structure 130 shown relates in this specific case to a sports floor, and in particular an artificial grass field. The top layer of the sports floor is formed by an artificial grass layer 132 between which usually a filling material 123 such as sand or various kinds of (rubber) granules is applied. Under the artificial grass layer 132, a substructure 131 formed by a system according to the invention is located, comprising several PCM panels located in one and the same plane, which are coupled in such a way that the coupled PCM panels are essentially locked both in a direction that extends in a plane defined by the coupled PCM panels, and preferably in a direction essentially perpendicular to the plane defined by the coupled PCM panels. On the underside of the substructure 131, one or more fluid pipelines 124 may be located, which can supply or withdraw heat or cold to or from the PCM panels. Under the substructure 131 constructed from PCM panels, a shock-absorbing layer 125 may optionally be provided.

Depending on whether such a shock-absorbing layer 125 is applied, the shock-absorbing layer 125 or the substructure 131 is installed on a foundation 126, such as a sand bed. For effective discharge of (rain)water, drainage tubes 127 are usually fitted in the foundation 126. Although the application of a system according to the invention in a floor structure of an artificial grass field is shown in this figure, the system may be implemented identically in sports floors with different kinds of screeds or in a road surface. In a usual case, for this the artificial grass layer 132 must be replaced with an alternative sports covering layer or an asphalt paving layer.

It will be clear that the invention is not limited to the embodiment examples illustrated and described here, but that numerous variants are possible within the scope of the appended claims.

## Claims

1. Panel (2, 30, 74, 91, 101, 111, 112) for manufacturing a substructure of a floor structure, such as a road surface or sports floor, comprising:
- a housing (3, 32), said housing (3, 32) enclosing at least one compartment that is filled at least partially with a phase change material, wherein the housing (3, 32) encloses at least one through hole (10, 34, 73, 95, 122) and
- at least one first coupling element (4, 113) arranged to be coupled with at least one second coupling element (51, 72, 114), such that adjacent of said panels (2, 30, 74, 91, 101, 111, 112) located essentially in one and the same plane may be coupled together, wherein the coupled panels(2, 30, 74, 91, 101, 111, 112) are essentially locked both in a direction that extends in a plane defined by the coupled panels (2, 30, 74, 91, 101, 111, 112), and preferably also in a direction essentially perpendicular to the plane defined by the coupled panels (2, 30, 74, 91, 101, 111, 112),
**characterised in that** the housing (3, 32) of the panel (2, 30, 74, 91, 101, 111, 112) is of essentially closed construction, and **in that** the phase change material is enclosed in the essentially closed housing (3, 32).

2. System (1, 70, 90, 100, 110) for manufacturing a substructure of a floor structure, such as a road surface or sports floor, comprising several panels (2, 30, 74, 91, 101, 111, 112) according to Claim 1, wherein the system comprises at least one second coupling element (51, 72, 114) that is arranged to be coupled with said at least one first coupling element (4, 113) of said at least one pane (2, 30, 74, 91, 101, 111, 112).

3. System according to Claim 2, wherein at least one of said panels 91, 101, 111, 112), and preferably each of said panels (2, 30, 74, 91, 101, 111, 112), encloses several through holes (10, 34, 73, 95, 122) preferably wherein the through holes (10, 34, 73, 95, 122) are arranged essentially regularly.

4. System according to Claim 2 or Claim 3, wherein the at least through hole (10, 34, 73, 95, 122) connects together an underside and an upper side of the panel (2, 30, 74, 91, 101, 111, 112).

5. System according to any of Claims 2-4, wherein at least one panel (2, 30, 74, 91, 101, 111, 112) encloses a single compartment for the phase change material.

6. System according to any of Claims 2-5, wherein at least one panel (2, 30, 74, 91, 101, 111, 112) is of essentially rigid construction, and preferably is made at least partially of plastic.

7. System according to any of Claims 2-6, wherein the wall thickness of at least one panel (2, 30, 74, 91, 101, 111, 112), preferably each panel (2, 30, 74, 91, 101, 111, 112), is at least 2 millimetres.

8. System according to any of Claims 2-7, wherein the housing (3, 32) of at least one 2. of said panels (2, 30, 74, 91, 101, 111, 112), and preferably each of said panels (2, 30, 74, 91, 101, 111, 112), is provided with at least one filling hole (7, 38).

9. System according to any of Claims 2-8, wherein the housing (3, 32) of at least one of said panels, each of said panels (2, 30, 74, 91, 101, 111, 112), is a blow-moulded housing (3, 32).

10. System according to any of Claims 2-9, wherein the housing (3, 32) is provided with at least one stiffening structure, in particular at least one stiffening rib (6, 36).

11. System according to any of Claims 2-10, wherein an outside surface of the underside and/or an outside surface of the upper side of the housing (3, 32) of at least one of said panels (2, 30, 74, 91, 101, 111, 112), preferably each of said panels (2, 30, 74, 91, 101, 111, 112), is provided with at least one groove (11, 37) arranged for receiving at least one part of a fluid pipeline, wherein each groove (11, 37) preferably connects to two longitudinal edges of the panel (2, 30, 74, 91, 101, 111, 112).

12. System according to any of Claims 2-11, wherein at least one through hole (10, 34, 73, 95, 122) is arranged in order to function as first coupling element (4, 113).

13. System according to any of Claims 2-12, wherein at least one second coupling element (51, 72, 114) forms an integral part of at least one 2. of said panels (2, 30, 74, 91, 101, 111, 112), preferably each of said panels (2, 30, 74, 91, 101, 111, 112).

14. System according to Claim 13, wherein at least one of said panels (2, 30, 74, 91, 101, 111, 112), preferably each of said panels (2, 30, 74, 91, 101, 111, 112), is provided on at least one longitudinal edge with the first coupling element (4, 113) and is provided with the second coupling element (51, 72, 114) on at least one other longitudinal edge, preferably an overlying longitudinal edge.

15. Floor structure, in particular a sports floor or a road surface, comprising:
- a substructure formed by a system according to one of Claims 2-14, wherein several of said panels (2, 30, 74, 91, 101, 111, 112) located in one and the same plane are coupled in such a way that the coupled panels (2, 30, 74, 91, 101, 111, 112) are essentially locked both in a direction that extends in a plane defined by the coupled panels (2, 30, 74, 91, 101, 112), and preferably also in a direction essentially perpendicular to the plane defined by the coupled panels (2, 30, 74, 91, 101, 111, 112), and
- at least one top layer (132) applied on the substructure, in particular a sports covering layer, such as an artificial grass layer, and/or an asphalt paving layer.

## Patentansprüche

1. Paneel (2, 30, 74, 91, 101, 111, 112) zum Herstellen einer Unterstruktur einer Bodenstruktur, wie etwa einer Straßenoberfläche oder eines Sportbodens, umfassend:
- eine Umhüllung (3, 32), wobei die Umhüllung (3, 32) mindestens einen Raum einschließt, der zumindest teilweise mit einem Phasenwechselmaterial gefüllt ist, wobei die Umhüllung (3, 32) mindestens ein Durchgangsloch (10, 34, 73, 95, 122) einschließt, und
- mindestens ein erstes Kopplungselement (4, 113), das dazu angeordnet ist, mit mindestens einem zweiten Kopplungselement (51, 72, 114) derart gekoppelt zu werden, dass aneinander angrenzende der Paneele (2, 30, 74, 91, 101, 111, 112), die sich im Wesentlichen in ein und derselben Ebene befinden, miteinander gekoppelt werden können, wobei die gekoppelten Paneele (2, 30, 74, 91, 101, 111, 112) im Wesentlichen sowohl in einer Richtung, die sich in einer Ebene erstreckt, die durch die gekoppelten Paneele (2, 30, 74, 91, 101, 111, 112) definiert ist, als vorzugsweise auch in einer Richtung im Wesentlichen im rechten Winkel zu der durch die gekoppelten Paneele (2, 30, 74, 91, 101, 111, 112) definierten Ebene verriegelt sind,
**dadurch gekennzeichnet, dass** die Umhüllung (3, 32) des Paneels (2, 30, 74, 91, 101, 111, 112) von einer im Wesentlichen geschlossenen Konstruktion ist, und dadurch, dass das Phasenwechselmaterial in der im Wesentlichen geschlossenen Umhüllung (3, 32) eingeschlossen ist.

2. System (1, 70, 90, 100, 110) zum Herstellen einer Unterstruktur einer Bodenstruktur, wie etwa einer Straßenoberfläche oder eines Sportbodens, umfassend mehrere Paneele (2, 30, 74, 91, 101, 111, 112) nach Anspruch 1, wobei das System mindestens ein zweites Kopplungselement (51, 72, 114) umfasst, das dazu angeordnet ist, mit dem mindestens einen ersten Kopplungselement (4, 113) des mindestens einen Paneels (2, 30, 74, 91, 101, 111, 112) gekoppelt zu werden.

3. System nach Anspruch 2, wobei mindestens eines der Paneele (2, 30, 74, 91, 101, 111, 112), und vorzugsweise jedes der Paneele (2, 30, 74, 91, 101, 111, 112), mehrere Durchgangslöcher (10, 34, 73, 95, 122) einschließt, vorzugsweise wobei die Durchgangslöcher (10, 34, 73, 95, 122) im Wesentlichen regelmäßig angeordnet sind.

4. System nach Anspruch 2 oder Anspruch 3, wobei das mindestens ein Durchgangsloch (10, 34, 73, 95, 122) eine Unterseite und eine Oberseite des Paneels (2, 30, 74, 91, 101, 111, 112) miteinander verbindet.

5. System nach einem der Ansprüche 2-4, wobei mindestens ein Paneel (2, 30, 74, 91, 101, 111, 112) einen einzelnen Raum für das Phasenwechselmaterial einschließt.

6. System nach einem der Ansprüche 2-5, wobei mindestens ein Paneel (2, 30, 74, 91, 101, 111, 112) von einer im Wesentlichen steifen Konstruktion ist und vorzugsweise zumindest teilweise aus Kunststoff besteht.

7. System nach einem der Ansprüche 2-6, wobei die Wanddicke mindestens eines Paneels (2, 30, 74, 91, 101, 111, 112), vorzugsweise jedes Paneels (2, 30, 74, 91, 101, 111, 112), mindestens 2 Millimeter beträgt.

8. System nach einem der Ansprüche 2-7, wobei die Umhüllung (3, 32) mindestens eines der Paneele (2, 30, 74, 91, 101, 111, 112), und vorzugsweise jedes der Paneele (2, 30, 74, 91, 101, 111, 112), mit mindestens einem Füllloch (7, 38) versehen ist.

9. System nach einem der Ansprüche 2-8, wobei die Umhüllung (3, 32) mindestens eines der Paneele, vorzugsweise jedes der Paneele (2, 30, 74, 91, 101, 111, 112), eine spritzgegossene Umhüllung (3, 32) ist.

10. System nach einem der Ansprüche 2-9, wobei die Umhüllung (3, 32) mit mindestens einer Versteifungsstruktur, insbesondere mindestens einer Versteifungsrippe (6, 36), versehen ist.

11. System nach einem der Ansprüche 2-10, wobei eine Außenfläche der Unterseite und/oder eine Außenfläche der Oberseite der Umhüllung (3, 32) mindestens eines der Paneele (2, 30, 74, 91, 101, 111, 112), vorzugsweise jedes der Paneele (2, 30, 74, 91, 101, 111, 112), mit mindestens einer Nut (11, 37) versehen ist, die dazu angeordnet ist, zumindest einen Teil einer Fluidleitung aufzunehmen, wobei jede Nut (11, 37) vorzugsweise mit zwei Längskanten des Paneels (2, 30, 74, 91, 101, 111, 112) verbunden ist.

12. System nach einem der Ansprüche 2-11, wobei mindestens ein Durchgangsloch (10, 34, 73, 95, 122) dazu angeordnet ist, als erstes Kopplungselement (4, 113) zu dienen.

13. System nach einem der Ansprüche 2-12, wobei mindestens ein zweites Kopplungselement (51, 72, 114) einen integralen Teil mindestens eines der Paneele (2, 30, 74, 91, 101, 111, 112), vorzugsweise jedes der Paneele (2, 30, 74, 91, 101, 111, 112), bildet.

14. System nach Anspruch 13, wobei mindestens eines der Paneele (2, 30, 74, 91, 101, 111, 112), vorzugsweise jedes der Paneele (2, 30, 74, 91, 101, 111, 112), an mindestens einer Längskante mit dem ersten Kopplungselement (4, 113) versehen ist und an mindestens einer anderen Längskante, vorzugsweise einer darüberliegenden Längskante, mit dem zweiten Kopplungselement (51, 72, 114) versehen ist.

15. Bodenstruktur, insbesondere ein Sportboden oder eine Straßenoberfläche, umfassend:
- eine durch ein System nach einem der Ansprüche 2-14 gebildete Unterstruktur, wobei mehrere der Paneele (2, 30, 74, 91, 101, 111, 112), die sich in ein und derselben Ebene befinden, derart gekoppelt werden, dass die gekoppelten Paneele (2, 30 74, 91, 101, 111, 112) im Wesentlichen sowohl in einer Richtung, die sich in einer Ebene erstreckt, die durch die gekoppelten Paneele (2, 30, 74, 91, 101, 111, 112) definiert ist, als vorzugsweise auch in einer Richtung im Wesentlichen im rechten Winkel zu der durch die gekoppelten Paneele (2, 30, 74, 91, 101, 111, 112) definierten Ebene verriegelt sind, und
- mindestens eine Oberschicht (132), die auf die Unterstruktur aufgebracht wird, insbesondere eine Sportdeckschicht, wie etwa eine künstliche Grasschicht, und/oder eine Asphaltpflasterschicht.

## Revendications

1. Panneau (2, 30, 74, 91, 101, 111, 112) destiné à fabriquer une sous-structure d'une structure de sol, telle qu'une surface de route ou un revêtement de sport, comprenant :
- un logement (3, 32), ledit logement (3, 32) renfermant au moins un compartiment qui est rempli au moins partiellement d'un matériau à changement de phase, le logement (3, 32) renfermant au moins un trou traversant (10, 34, 73, 95, 122) et
- au moins un premier élément d'accouplement (4, 113) agencé pour être accouplé avec au moins un second élément d'accouplement (51, 72, 114), de sorte que des panneaux adjacents parmi lesdits panneaux (2, 30, 74, 91, 101, 111, 112) situés essentiellement dans un seul et même plan peuvent être accouplés ensemble, dans lequel les panneaux accouplés (2, 30, 74, 91, 101, 111, 112) sont essentiellement verrouillés à la fois dans une direction qui s'étend dans un plan défini par les panneaux accouplés (2, 30, 74, 91, 101, 111, 112), et de préférence également dans une direction essentiellement perpendiculaire au plan défini par les panneaux accouplés (2, 30, 74, 91, 101, 111, 112) ;
**caractérisé en ce que** le logement (3, 32) du panneau (2, 30, 74, 91, 101, 111, 112) est de construction essentiellement fermée, et **en ce que** le matériau à changement de phase est enfermé dans le logement essentiellement fermé (3, 32).

2. Système (1, 70, 90, 100, 110) de fabrication d'une sous-structure d'une structure de sol, telle qu'une surface de route ou un revêtement de sport, comprenant plusieurs panneaux (2, 30, 74, 91, 101, 111, 112) selon la revendication 1, le système comprenant au moins un second élément d'accouplement (51, 72, 114) qui est agencé pour être accouplé avec ledit au moins un premier élément d'accouplement (4, 113) dudit au moins un panneau (2, 30, 74, 91, 101, 111, 112).

3. Système selon la revendication 2, dans lequel au moins l'un desdits panneaux (2, 30, 74, 91, 101, 111, 112), et de préférence chacun desdits panneaux (2, 30, 74, 91, 101, 111, 112), renferme plusieurs trous traversants (10, 34, 73, 95, 122), de préférence dans lequel les trous traversants (10, 34, 73, 95, 122) sont disposés essentiellement régulièrement.

4. Système selon la revendication 2 ou la revendication 3, dans lequel l'au moins un trou traversant (10, 34, 73, 95, 122) relie ensemble une face inférieure et une face supérieure du panneau (2, 30, 74, 91, 101, 111, 112).

5. Système selon l'une quelconque des revendications 2 à 4, dans lequel au moins un panneau (2, 30, 74, 91, 101, 111, 112) renferme un seul compartiment pour le matériau à changement de phase.

6. Système selon l'une quelconque des revendications 2 à 5, dans lequel au moins un panneau (2, 30, 74, 91, 101, 111, 112) est de construction essentiellement rigide, et de préférence est réalisé au moins partiellement en matière plastique.

7. Système selon l'une quelconque des revendications 2 à 6, dans lequel l'épaisseur de paroi d'au moins un panneau (2, 30, 74, 91, 101, 111, 112), de préférence de chaque panneau (2, 30, 74, 91, 101, 111, 112), est d'au moins 2 millimètres.

8. Système selon l'une quelconque des revendications 2 à 7, dans lequel le logement (3, 32) d'au moins un desdits panneaux (2, 30, 74, 91, 101, 111, 112), et de préférence de chacun desdits panneaux (2, 30, 74, 91, 101, 111, 112), est pourvu d'au moins un trou de remplissage (7, 38).

9. Système selon l'une quelconque des revendications 2 à 8, dans lequel le logement (3, 32) d'au moins un desdits panneaux, de préférence de chacun desdits panneaux (2, 30, 74, 91, 101, 111, 112), est un logement moulé par soufflage (3, 32).

10. Système selon l'une quelconque des revendications 2 à 9, dans lequel le logement (3, 32) est muni d'au moins une structure raidisseuse, notamment d'au moins une nervure raidisseuse (6, 36).

11. Système selon l'une quelconque des revendications 2 à 10, dans lequel une surface extérieure de la face inférieure et/ou une surface extérieure de la face supérieure du logement (3, 32) d'au moins un desdits panneaux (2, 30, 74, 91, 101, 111, 112), de préférence de chacun desdits panneaux (2, 30, 74, 91, 101, 111, 112), est pourvue d'au moins une rainure (11, 37) agencée pour recevoir au moins une partie d'une canalisation de fluide, dans lequel chaque rainure (11, 37) se connecte de préférence à deux bords longitudinaux du panneau (2, 30, 74, 91, 101, 111, 112).

12. Système selon l'une quelconque des revendications 2 à 11, dans lequel au moins un trou traversant (10, 34, 73, 95, 122) est disposé de manière à fonctionner comme premier élément d'accouplement (4, 113).

13. Système selon l'une quelconque des revendications 2 à 12, dans lequel au moins un second élément d'accouplement (51, 72, 114) fait partie intégrante d'au moins l'un desdits panneaux (2, 30, 74, 91, 101, 111, 112), de préférence de chacun desdits panneaux (2, 30, 74, 91, 101, 111, 112).

14. Système selon la revendication 13, dans lequel au moins un desdits panneaux (2, 30, 74, 91, 101, 111, 112), de préférence chacun desdits panneaux (2, 30, 74, 91, 101, 111, 112), est muni sur au moins un bord longitudinal du premier élément d'accouplement (4, 113) et est muni du second élément d'accouplement (51, 72, 114) sur au moins un autre bord longitudinal, de préférence un bord longitudinal superposé.

15. Structure de sol, en particulier un revêtement de sport ou une surface de route, comprenant :
- une sous-structure formée par un système selon l'une des revendications 2 à 14, dans laquelle plusieurs desdits panneaux (2, 30, 74, 91, 101, 111, 112) situés dans un seul et même plan sont accouplés de telle manière que les panneaux accouplés (2, 30, 74, 91, 101, 111, 112) sont essentiellement verrouillés à la fois dans une direction qui s'étend dans un plan défini par les panneaux accouplés (2, 30, 74, 91, 101, 111, 112), et de préférence également dans une direction essentiellement perpendiculaire au plan défini par les panneaux accouplés (2, 30, 74, 91, 101, 111, 112), et
- au moins une couche supérieure (132) appliquée sur la sous-structure, en particulier une couche de revêtement sportif, telle qu'une couche de gazon artificiel, et/ou une couche de revêtement en asphalte.
